# EUROPEAN PATENT APPLICATION

(11) **EP 2 869 491 A1**
(43) Date of publication of application: **06.05.2015**
(21) Application number: 13382440.9
(22) Date of filing: 31.10.2013
(51) Int. Cl.: H04L 5/00

(54) **Method, communication system and controller node for the support of machine-type communications (MTC) in a LTE wireless network**

(71) Applicant: Telefonica S.A., 28013 Madrid (ES)
(72) Inventor: Lorca Hernando, Javier, 28013 Madrid (ES)
(74) Representative: Carlos Hernando, Borja

(57) **Abstract**

A method, a communication system and controller node for the support of Machine-Type Communications (MTC) in a LTE wireless network

In order to extend coverage and enable the support of a plurality of other MTC user devices the invention determines a MTC Synchronization Area in said LTE wireless network; determines a controller node connected to said Synchronization Area; schedules downlink MTC data to said MTC user device on a subset of Multicast/Broadcast Single Frequency Network (MBSFN) downlink subframes reserved for MTC downlink traffic; schedules uplink MTC data to said MTC user device in some uplink subframes reserved for MTC traffic, said subframes containing, merely, data scheduled for MTC user devices; detects uplink MTC data sent from said MTC user device simultaneously by all the cells; and sends to said set of cells for improved downlink coverage, downlink MTC subframes and combines said detected uplink MTC data for improved uplink coverage.

## Description

### Field of the art

The present invention generally relates to the field of Machine-Type Communications (MTC), and more specifically, to a method, a communication system and a controller node for the support of Machine-Type Communications (MTC) in a LTE wireless network with tight requirements on coverage and power saving capabilities.

### Background of the invention

Long-Term Evolution (LTE) is the next step in cellular Third-Generation (3G) systems, which represents basically an evolution of present mobile communications standards, such as Universal Mobile Telecommunication System (UMTS) and Global System for Mobile Communications (GSM) [1]. It is a Third Generation Partnership Project (3GPP) standard that provides throughputs up to 50 Mbps in uplink and up to 100 Mbps in downlink. It uses scalable bandwidth from 1.4 to 20 MHz in order to suit the needs of network operators that have different bandwidth allocations. LTE is also expected to improve spectral efficiency in networks, allowing carriers to provide more data and voice services over a given bandwidth.

LTE-Advanced (LTE-A), an evolution of LTE, is being standardized in LTE Release 10 and beyond. It is aimed at fulfilling International Mobile Telecommunications (IMT)-Advanced requirements, whose capabilities go beyond those of IMT-2000 and include enhanced peak data rates to support advanced services and applications (100 Mbps for high mobility, and 1 Gbps for low mobility).

One of the growing fields of interest in LTE is Machine-Type Communications (MTC). MTC refers to the type of traffic generated by (or directed to) a number of connected machines (such as remote sensors, vending machines, vehicles, and so on) in a given cell, and the possible enhancements in coverage and capacity required for the support of a large number of such devices. MTC requirements were addressed by 3GPP since Release 8, focusing on GSM and UMTS [2], but LTE has also given attention to MTC in Release 10 and Release 11 [3] [4] [5]. MTC traffic is characterized by having very low bit rate requirements (on the order of few kbps), high latencies (on the order of seconds), and a possibly large number of almost inactive devices camped in a single cell.

In order to turn LTE into a cost-effective solution for MTC, studies on how to improve the radio access network procedures for MTC devices are performed in Release 11, and Release 12 foresees several mechanisms to extend the coverage and lower the cost of the corresponding devices [6]. Additional studies in 3GPP are also being conducted in order to reduce layer-3 signaling overhead, as well as to increase battery saving through delayed transmissions and the introduction of extended DRX cycles [10].

Other solutions, as the one disclosed in patent application US-A1-2012/0327894, try to define specific frequency regions for MTC traffic within the normal LTE subframe structure, including special control channels, for the support of limited bandwidth devices. Yet other solutions, like the one proposed in patent application WO-A1-2013/051350, propose deep changes in subframe structure for the support of MTC traffic in heterogeneous networks, avoiding interferences of control and synchronization signals from the macro base stations.

A problem with current solutions is that they try to take advantage of the legacy LTE physical layer structure, just proposing slight modifications to the physical channels in order to adapt the air interface to the requirements of MTC traffic. These enhancements are however limited as the original LTE frame structure and physical layer capabilities were not designed to cover the special needs of MTC traffic. The characteristics of very low mobility, low data rate, high latency, enhanced coverage and tight power saving requirements are in conflict with some basic design assumptions of legacy LTE physical layer [8]. Hence, present LTE networks suffer the drawback of limited MTC support due to conflicting requirements between MTC and non-MTC devices.

The solution proposed in US-A1-2012/0327894 does not address any coverage improvements that could make LTE (and other similar wireless technologies) a cost-effective alternative for MTC traffic. The solution proposed in WO-A1-2013/051350 has significant implications over legacy devices as they propose deep changes on the LTE subframe structure, and are only suited for heterogeneous scenarios.

Therefore, more specific solutions for the support of a massive number of MTC devices in LTE are needed in order to enhance coverage and improve power saving capabilities without impacting other non-MTC devices.

### REFERENCES

[1] 3GPP TS 36.300, Evolved Universal Terrestrial Radio Access (E-UTRA) and Evolved Universal Terrestrial Radio Access Network (E-UTRAN); Overall Description, Stage 2 (Release 8)
[2] 3GPP TR 22.868 (March 2007), "Facilitating Machine to Machine Communication in 3GPP Systems"
[3] 3GPP TS 22.368 , "Service requirements for Machine-Type Communications (MTC)"
[4] 3GPP TR 37.868 (September 2011), "Study on RAN Improvements for Machine-type Communications"
[5] 3GPP TR 36.888 v2.0.0 (June 2012), "Study on provision of low-cost MTC UEs based on LTE"
[6] 3GPP TSG RAN #57, RP-121441 "Study Item on the provision of low-cost MTC UEs based on LTE", Vodafone
[7] S. Sesia, I. Toufik, M. Baker (editors), "LTE, the UMTS Long Term Evolution: From Theory to Practice" (2nd edition), John Wiley & Sons, 2011
[8] 3GPP TSG RAN WG1 #72, R1-130462 "Feasibility of coverage extension of physical channels for MTC devices", Alcatel-Lucent, Alcatel-Lucent Shanghai Bell
[9] 3GPP TSG RAN WG1 #72bis, R1-130888 "Coverage analysis and evaluation on PDSCH/PUSCH and Reference Signals for low-cost MTC UEs", Huawei, HiSilicon
[10] 3GPP TR 37.869 v0.2.0 (April 2013), "Study on Enhancements to Machine-Type Communications (MTC) and other Mobile Data Applications; Radio Access Network (RAN) aspects"
[11] E. Dahlman, S. Parkvall and J. Sköld, "4G: LTE/LTE-Advanced for Mobile Broadband", Academic Press, 2011, p 253

### Summary of the Invention

In accordance to a first aspect there is provided, a method for the support of Machine-Type Communications (MTC) in a LTE wireless network, wherein at least one MTC user device is connected to a base station through a radio interface. On contrary to the known proposals, the method of the first aspect in order to extend coverage and enable the support of a plurality of other MTC user devices comprises:
- determining at least one set of cells, named as MTC Synchronization Area, in said LTE wireless network, whereby MTC traffic transmissions from said set of cells are simultaneously broadcast by said cells towards said MTC user device;
- determining at least one controller node connected to said at least one determined set of cells;
- scheduling, said controller node, downlink MTC data to said MTC user device on a subset of Multicast/Broadcast Single Frequency Network downlink subframes reserved for MTC downlink traffic within said set of cells;
- scheduling, said controller node, uplink MTC data to said MTC user device in some uplink subframes reserved for MTC traffic within said set of cells, said subframes containing, merely, data scheduled for MTC user devices;
- detecting uplink MTC data sent from said MTC user device simultaneously by all the cells comprising said set of cells; and
- sending, said controller node, to said set of cells for improved downlink coverage, downlink MTC subframes, named as MTC MBSFN subframes, and combining said detected uplink MTC data for improved uplink coverage.

The invention determines as many controller nodes as many of said set of cells are determined in the LTE wireless network.

In a preferred embodiment, an extended cyclic prefix length structure, so as to prevent inter-symbol interference from far LTE base stations, is used for the uplink and downlink subframes reserved for MTC traffic. In this invention this preferred characteristic will be exploited in order to support the combined transmission and reception of MTC signals by the cells that comprise an MTC Synchronization Area.

MTC subframes in uplink and downlink may have different patterns in order to support asymmetric uplink/downlink traffic.

In an embodiment, a subset of the downlink MBSFN subframes reserved for MTC traffic includes MTC scheduling information to said MTC user device within said set of cells, and a subset of said downlink MBSFN subframes reserved for MTC traffic includes MTC data towards said MTC user device within said set of cells, being the subset of subframes including data different from said subset of subframes including MTC scheduling information.

The MTC scheduling information informs of the actual subframes in use and of the resource blocks allocated to said MTC user device in said set of cells.

The set of cells as a preferred option are connected to the controller node, which is connected to at least a Packet Data Network Gateway node or a Serving Gateway node of said LTE wireless network, through a S1 or an X2 interface.

Moreover, information about which subset of MBSFN downlink subframes are reserved for MTC traffic is broadcasted through system information by a control channel. This information would be released by a PBCH broadcast channel that habitually radiates the required cell parameters to operate; in this case would add this indication specifically for support of MTC.

In an embodiment, the MTC user device may be allowed to turn off transmission and reception during subframes other than those dedicated to MTC traffic, irrespective of the Discontinuous Reception configurations of the cell, hence obtaining enhanced power saving capabilities.

In accordance to a second aspect there is provided, a communication system for the support of Machine-Type Communications (MTC) in a LTE wireless network, comprising at least one base station, and at least one MTC user device connected to said base station. The system further including:
- at least one set of cells, named as MTC Synchronization Area, configured to simultaneously: broadcast MTC traffic transmissions thereof towards said MTC user device, and to detect uplink MTC data sent from said MTC user device (MTC_UE);
- at least one controller node connected to said at least one set of cells, said controller node including: means for scheduling downlink MTC data to said MTC user device on a subset of Multicast/Broadcast Single Frequency Network downlink subframes reserved for MTC downlink traffic within said set of cells; means for scheduling uplink MTC data to said MTC user device in some uplink subframes reserved for MTC traffic within said set of cells, said subframes containing, merely, data scheduled for MTC user devices; means for sending to said set of cells downlink MTC subframes, named as MTC MBSFN subframes, and means for combining the simultaneously detected uplink MTC from said set of cells.

In accordance to a third aspect, there is provided a controller node comprising at least one processor and at least one memory including computer program code, wherein said at least one memory and the computer program code are configured to, with said at least one processor, cause the controller node to at least coordinate transmission and reception of at least one synchronized set of cells, that simultaneously broadcast MTC traffic transmissions thereof towards at least one MTC user device and detect uplink MTC data sent from said MTC user device by scheduling downlink MTC data to said MTC user device on a subset of Multicast/Broadcast Single Frequency Network downlink subframes reserved for MTC downlink traffic within said set of cells; scheduling uplink MTC data to said MTC user device in some uplink subframes reserved for MTC traffic within said set of cells, said subframes containing, merely, data scheduled for MTC user devices; sending to said set of cells downlink MTC subframes, named as MTC MBSFN subframes, and combining the simultaneously detected uplink MTC data from said set of cells.

In accordance with some embodiments, the controller node of the third aspect includes means for connecting with said at least one synchronized set of cells through at least a S1 or an X2 interface. Furthermore, it includes means for connecting with at least a Packet Data Network Gateway node or a Serving Gateway node of a LTE wireless network.

### Brief Description of the Drawings

The previous and other advantages and features will be more fully understood from the following detailed description of embodiments, with reference to the attached, which must be considered in an illustrative and non-limiting manner, in which:
Fig. 1 is an illustration of the basic concept of the proposed invention wherein an LTE radio access network is aimed at providing efficient connectivity to a number of MTC devices in a transparent way.
Fig. 2 illustrates a scenario where the present invention could be applicable.
Fig. 3 illustrates the enhancement of downlink coverage provided by multi-cell reception of downlink MTC signals, according to some embodiments.
Fig. 4 illustrates the improvement in uplink coverage brought by suitable combination of uplink signals, according to some embodiments.
Fig. 5 illustrates how the downlink MTC traffic is synchronously sent through proper interfaces between the eNBs and the MTCC.
Fig. 6 illustrates the proposed concept of MTC Synchronization Area.
Fig. 7 illustrates the proposed architecture extension for introduction of the MTC Controller node (MTCC).
Fig. 8 shows the proposed subframe structure for MTC MBSFN subframes.
Fig. 9 illustrates a possible MTC MBSFN RS structure, where one resource element (RE) every two is devoted to reference signals.
Fig. 10 illustrates an example periodicity pattern expected for MTC MBSFN Scheduling subframes.
Fig. 11 illustrates a possible subframe structure for uplink MTC traffic.
Fig. 12 illustrates the case where uplink transmissions from two distant MTC devices are received by a given cell within the MTC Synchronization Area.
Fig. 13 illustrates a possible MTC DMRS structure similar to that proposed for MTC MBSFN RS.
Fig. 14 illustrates a particular embodiment for the support of MTC in a LTE wireless network, as proposed by the invention.

### Detailed Description of the Invention

The present invention proposes a new radio access entity to coordinate transmission and reception within a cluster or set of cells where MTC traffic is collectively served, and the use of a special subframe structure for optimized radio resource management in both uplink and downlink. Uplink MTC transmissions are designed so as to be received by all the cells comprising the cluster, and later combined for improved coverage, while downlink MTC subframes leverage on so-called Multicast/Broadcast Single Frequency Network (MBSFN) subframes for improved reception within the cluster.

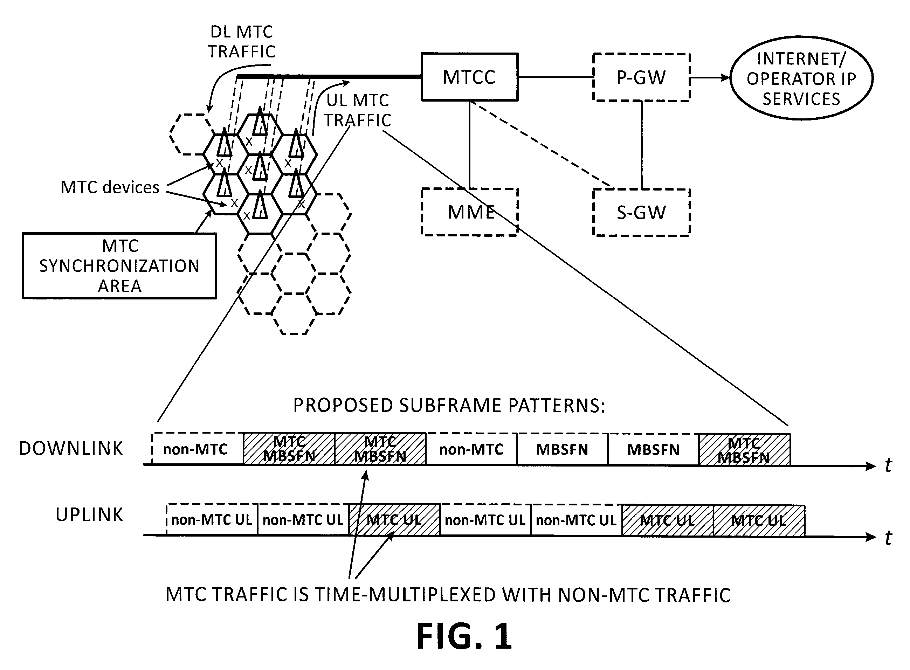

Fig. 1 illustrates the basic concept of the proposed invention in which an LTE radio access network is aimed at providing efficient connectivity to a number of MTC devices in a transparent way.

A cluster of cells, denoted in what follows as an MTC Synchronization Area, is defined as a set of cells that coordinate transmissions for MTC traffic in both uplink and downlink directions. A new logical entity, denoted in what follows as MTC Controller (MTCC, depicted in fig. 1 with solid lines), is introduced with the purpose of coordinating resources for MTC devices camped in any of the cells that comprise a given MTC Synchronization Area. The MTCC would be preferably connected to the P-GW or the S-GW nodes (in dashed lines) prior to connecting to the Internet or operator IP services. Downlink coverage can therefore be greatly improved by exploiting multi-cell transmissions from the cells contained in the MTC Synchronization Area, through use of a subset of MBSFN subframes reserved for MTC downlink traffic. In what follows these subframes will be denoted as MTC MBSFN subframes.

Similar to downlink, uplink MTC traffic can be restricted to specific subframes not carrying any other traffic type. In this case uplink transmissions from a single MTC device can be simultaneously received by all the cells comprising an MTC Synchronization Area, and proper combination of the signals at a physical or higher level by the MTCC node will enhance uplink coverage as in the downlink case. In what follows, uplink subframes reserved for MTC traffic will be denoted as MTC uplink subframes.

As shown in figure 1, three types of downlink subframes can be considered: Non-MTC subframes, corresponding to legacy unicast transmissions; MBSFN subframes, corresponding to legacy multicast/broadcast data transmissions; MTC MBSFN subframes, which are a subset of MBSFN subframes proposed by the present invention to carry dedicated downlink MTC traffic.

Similarly in uplink two types of subframes will be considered: Non-MTC subframes, corresponding to legacy unicast transmissions; MTC subframes, proposed by the present invention to carry dedicated uplink MTC traffic.

Time-division multiplexing of non-MTC and MTC subframes enables having a different subframe structure for MTC traffic in order to exploit the particular characteristics of MTC without impacting legacy LTE behavior. Enhanced power saving capabilities can also be obtained by allowing devices to turn off transmission and reception during subframes other than those dedicated to MTC traffic. Paging occasions for MTC devices will also be concentrated on MTC MBSFN subframes so that devices can enter into a power saving state during the remaining subframes.

Scheduling of both uplink and downlink MTC traffic can be provided as stand-alone information in certain MTC downlink subframes, denoted in what follows as MTC MBSFN Scheduling subframes. This allows for having a large number of MTC devices in the same MTC Synchronization Area without suffering from the limited capacity of the Physical Downlink Control Channel (PDCCH). Actual MTC downlink data will be delivered by the remaining MTC MBSFN subframes, denoted in what follows as MTC MBSFN Data subframes. The high latency and low bit rate requirements of MTC traffic allow for centralizing the scheduling information in specific subframes without significant impact on the overall end-to-end delay.

The cells that comprise an MTC Synchronization Area will be tightly time-synchronized in such a way that downlink transmissions will arrive at the user within the length of the cyclic prefix (CP), and an MTC receiver will observe multiple versions of the signal with different delays due to multi-cell transmission. However cells belonging to different MTC Synchronization Areas are not required to be time-synchronized by the present invention.

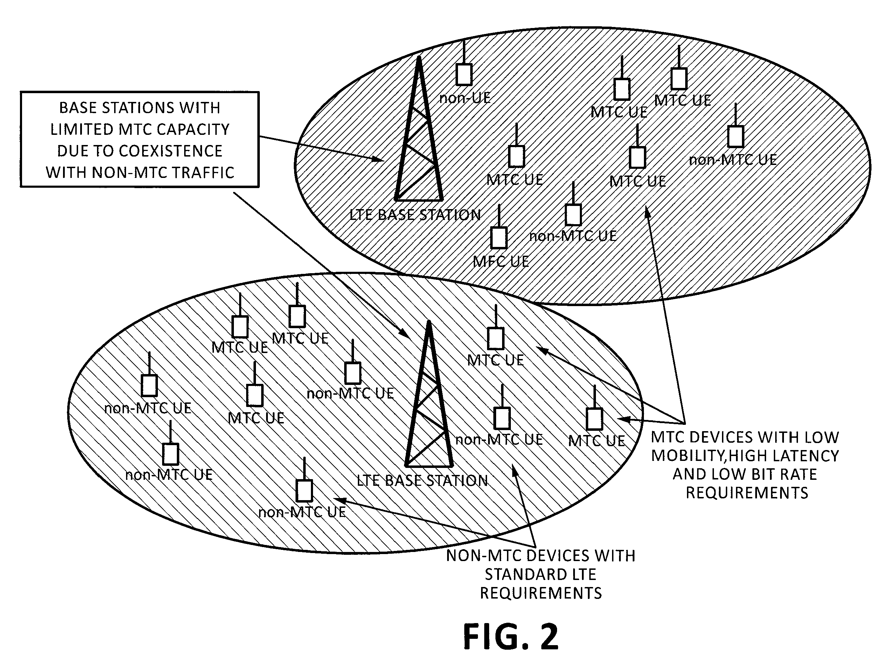

In reference to Fig. 2 it is illustrated a possible scenario for applicability of the proposed invention. A (possibly high) number of MTC devices are camped in an LTE radio access network, each characterized by having a very low traffic profile, high latency and also low mobility conditions. The aim of the present invention is to provide means for efficient communication to/from multiple MTC devices, by surpassing the limitations of the legacy LTE subframe structure in order to increase the coverage and capacity without impacting other non-MTC devices. In order to do so, and as said before, a number of modifications aimed at addressing MTC traffic in a more efficient way are proposed:
- Definition of the MTC Synchronization Area, whereby MTC traffic is collectively served by its constituent cells in a coordinated way. The MTC Synchronization Area behaves as a "super cell" from the viewpoint of the MTC device: traffic to/from MTC devices camped on any one of its cells is controlled in a unified way, such that transmission and reception is simultaneously performed by the constituent cells as if they were a single cell. Downlink signals aimed at any MTC device inside an MTC Synchronization Area will be broadcast by its constituent cells, and uplink signals from MTC devices are simultaneously received by all the cells for improved detection.
- Introduction of the MTC Controller (MTCC) node that controls the broadcast of downlink MTC traffic and the combined reception of uplink MTC traffic. Joint transmission and reception in an MTC Synchronization Area is facilitated by the MTCC node by managing downlink and uplink resources in a unified way and combining MTC uplink traffic in order to improve coverage.
- Definition of the new subframe structure is defined for MTC downlink traffic. It leverages on MBSFN subframes [7], by reserving a subset of them for dedicated MTC data while not impacting legacy LTE operation. These subframes will be denoted as MTC MBSFN subframes. Scheduling information for both uplink and downlink MTC traffic is delivered through special downlink subframes, denoted as MTC MBSFN Scheduling subframes, under control of the MTCC. Downlink data are carried by the remaining MTC downlink subframes, which are denoted as MTC MBSFN Data subframes. All the cells comprising a given MTC Synchronization Area will identically transmit the same downlink contents to their MTC devices for improved detection. All the MTC devices camped in an MTC Synchronization Area will be granted orthogonal resources by the MTCC.
- Definition of the new subframe structure for uplink MTC traffic, resulting in especial subframes denoted as MTC uplink subframes. MTC uplink traffic is scheduled at specific subframes which are time-multiplexed with other non-MTC traffic. Partitioning of MTC and non-MTC subframes is performed by the MTCC, which controls resources for all the cells within an MTC Synchronization Area. All the constituent cells will receive uplink traffic from MTC devices and send it to the MTCC for proper signal combination. The base stations will avoid scheduling any non-MTC traffic in MTC uplink subframes, including retransmissions and implicit grants from semi-persistent scheduling (SPS) operation.

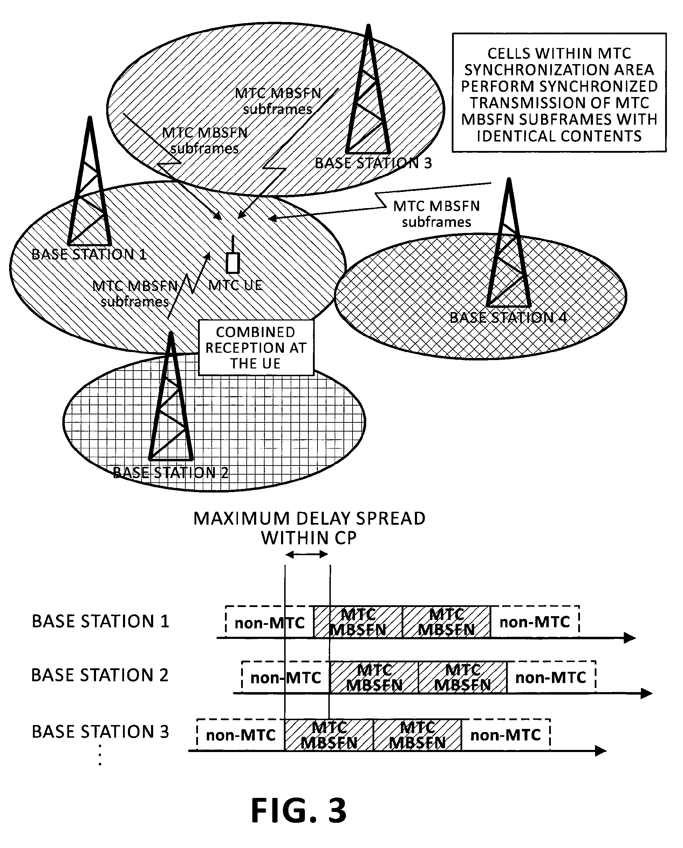

The defined MTC Synchronization Area is characterized by tight time-synchronization of the cells involved, in such a way that the users will receive multiple copies of the same MTC MBSFN subframes. In order to avoid inter-symbol interference from distant cells, the extended cyclic prefix structure foreseen by MBSFN subframes is exploited. The User Equipment (UE) will therefore combine multiple received signals from several cells and coverage will be improved. Fig. 3 illustrates the enhancement of downlink coverage provided by multi-cell reception of downlink MTC signals, where MTC MBSFN subframes are combined from multiple cells with a maximum delay spread within the cyclic prefix length.

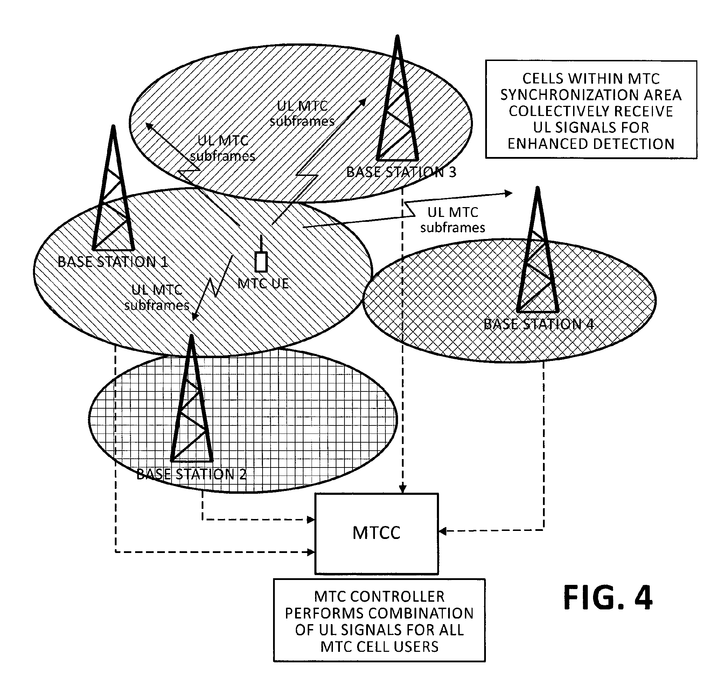

Similarly, uplink traffic from MTC devices is collectively received by all the cells that form an MTC Synchronization Area. Devices at the cell edges will thus benefit from enhanced coverage through proper combination of the uplink signals by the MTCC. Uplink signals are sent by the cells to the controlling MTCC node through any suitable interface, and combination can be performed at a physical or higher level in a macrodiversity fashion. Fig. 4 illustrates the improvement in uplink coverage brought by suitable combination of uplink signals.

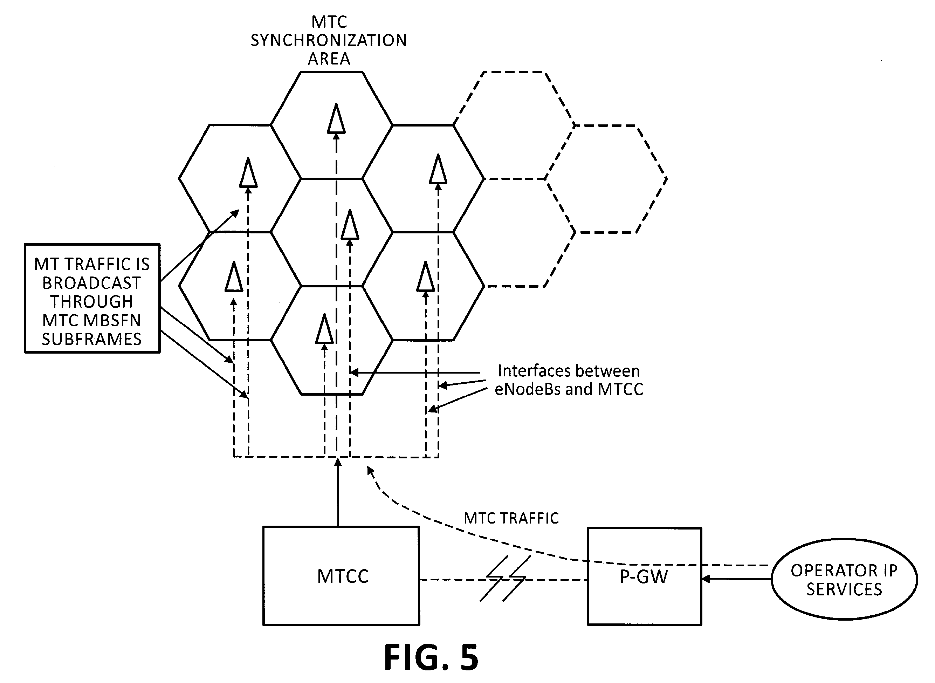

Cells belonging to different MTC Synchronization Areas are not required to be time-synchronized for the purposes of the present invention. However, downlink MTC traffic will be served by the MTCC towards the relevant cells in a synchronized way. This is illustrated in figure 5, where downlink MTC traffic is synchronously sent through proper interfaces between the eNodeBs and the MTCC. These interfaces may be based upon legacy X2 or S1 interfaces, not precluding any other possibility according to implementation needs. Although each MTC device will camp in only one cell (thus receiving control information from a single cell), detection of user data will be enhanced by combining the signals to/from multiple cells.

The proposed structure allows for decoupling downlink and uplink MTC traffic by having different subframe patterns for each direction. In this way it is possible to cope with asymmetrical traffic patterns that may appear with MTC devices. MTC devices will be able to turn off their receivers during subframes not scheduled for MTC downlink traffic, in addition to standard discontinuous reception (DRX) schemes. This enhances LTE power saving capabilities by exploiting the highly bursty nature of MTC traffic.

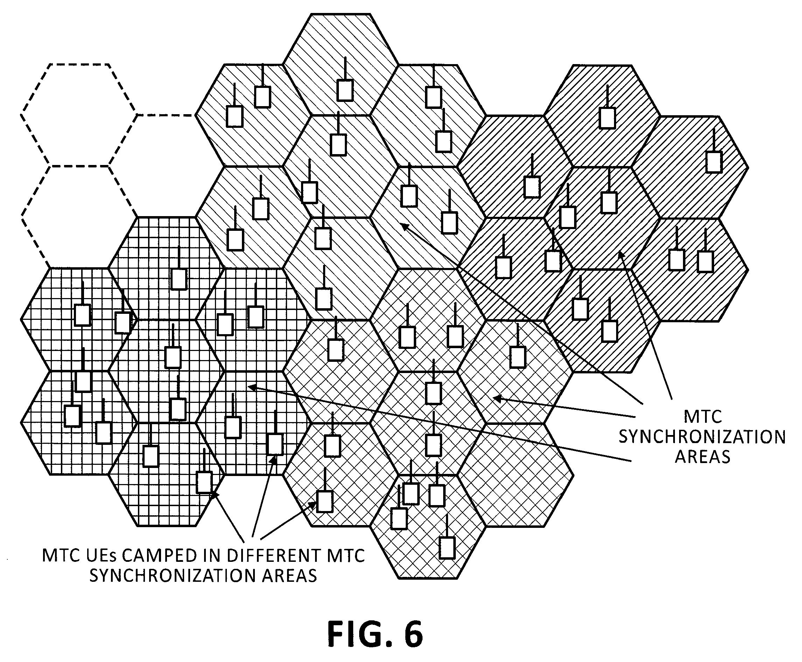

Fig. 6 illustrates the proposed concept of MTC Synchronization Area. A number of neighbouring cells are fully coordinated in such a way that they collectively appear as a single "super cell" from the viewpoint of MTC devices camped on any of the constituent cells. Coordination within the MTC Synchronization Area takes place at several levels:
○ Tight time synchronization is assumed within an MTC Synchronization Area, thereby synchronizing downlink physical transmissions so as to appear to the users as a single "super cell" with significant multipath. Combination of all received signals by MTC devices will be possible whenever the maximum delay spread of the combined radio channel does not exceed the duration of the cyclic prefix. This poses a limit for the overall maximum size of an MTC Synchronization Area for a given cyclic prefix length.
○ In addition to time synchronization, downlink traffic towards MTC devices will be broadcast by all the cells contained in an MTC Synchronization Area. Downlink subframes reserved for MTC traffic will therefore be broadcast by the constituent cells carrying MTC scheduling and data towards MTC devices. This allows for significant performance enhancement at the cell edges, as neighbouring cells will reinforce detection at the UE instead of creating interference. The more cells are contained within an MTC Synchronization Area, the higher will be the performance improvement.
○ Uplink transmissions from MTC devices can also be received by all the cells comprising an MTC Synchronization Area, and combined by the MTCC for improved detection. This can boost uplink performance at the cell edges if suitable combination strategies are employed.
○ Both uplink and downlink scheduling of MTC traffic will be coordinated by the MTCC for the whole MTC Synchronization Area. Transmission instants will therefore be dictated by the MTCC according to traffic load of MTC and non-MTC devices. The scheduler for MTC traffic will therefore be centralized in the MTCC, leaving the schedulers at the base stations for non-MTC traffic. In this way resources are coordinated for the whole area in a unified way.

Broadcast of MTC downlink traffic is proposed to leverage on so-called MBSFN subframes [7]. MBSFN subframes are especial subframes reserved for multicast/broadcast multimedia services (MBMS) as delivered by the radio access network (such as mobile TV, advertising or weather services, among others). MBSFN subframes are time-multiplexed with non-MBSFN subframes according to semi-static configuration, and benefit from an extended cyclic prefix in order to avoid inter-symbol interference. Moreover, LTE devices are required to detect MBSFN subframes so as to distinguish them from normal traffic and, depending on the subscription type and device capabilities, whether decode broadcast services or not. It is thus possible to exploit these subframes for MTC traffic in a backwards compatible way, without impacting legacy LTE operation. Given that the amount of MTC traffic per device is usually very small (of the order of 100 bytes with a latency of 3 - 5 seconds, as agreed in [9]), a large number of devices can be simultaneously served in a single MBSFN subframe. MBSFN subframes carrying MTC data are denoted as MTC MBSFN subframes in the present invention.

MTC traffic may not use Hybrid Automatic Repeat Request (HARQ) when the device is in bad radio conditions. Instead, a fixed pattern of retransmissions may be employed without ACK or NACK indications from the receiver side. However, it can be left to implementation whether to use HARQ or not. The same applies to link adaptation, eventually leaving a fixed transmission format for MTC devices in poor coverage in order to avoid costly signaling of channel state information (CSI). Any possibility will be equally valid for the purpose of the present invention depending on implementations needs.

Coordination within an MTC Synchronization Area refers only to MTC traffic. Data to/from non-MTC devices will follow standard LTE procedures. In addition, cell synchronization and initial random access by MTC devices will also follow the standard procedures through Primary/Secondary Synchronization Signals (PSS/SSS) and Physical Random Access Channel (PRACH), as devices will not know the actual MTC MBSFN configuration prior to initial access. The Physical Downlink Control Channel (PDCCH) present in non-MTC subframes will also be monitored by MTC devices for acquisition of system information. Similarly, the timing advance procedure will be managed by the serving cell; all other cells in the MTC Synchronization Area will only contribute to improvements in the detection process provided that the time differences between users are within the cyclic prefix length.

Once camped in a given serving cell, downlink MTC data towards a device will be broadcast by all the cells that comprise an MTC Synchronization Area (including the serving cell). The device needs not be aware of the actual broadcast operation, but enjoy a better signal quality without changing the association with the serving cell. Similarly, in uplink all the cells will contribute to enhanced detection, but each device will behave as though information were sent to a single cell at specific subframes with improved detection properties.

The MBSFN pattern in use by all the cells is provided through broadcast of system information, thus indicating which subframes in each frame are actually MBSFN subframes [7]. This configuration is semi-static and can change over time according to traffic needs. This invention proposes to extend the system information contents so as to also indicate which of the foreseen MBSFN subframes are actually reserved for MTC traffic within an MTC Synchronization Area. Any procedure for signaling this information will be equally valid for the present invention, such as extending any suitable System Information Block (SIB) or introducing a new one, provided that the same extended control information would be broadcast by all the cells that comprise an MTC Synchronization Area. Each MTC Synchronization Area would possibly have a different pattern of MTC MBSFN subframes according to the amount of MTC traffic. Legacy non-MBSFN devices will ignore these MTC MBSFN subframes as part of MBSFN traffic. Non-MTC devices willing to receive MBSFN subframes will only pay attention to those MBSFN subframes not carrying MTC traffic according to higher-layer MBMS scheduling [7]. Therefore backwards compatibility can be ensured with minimal impact towards legacy devices.

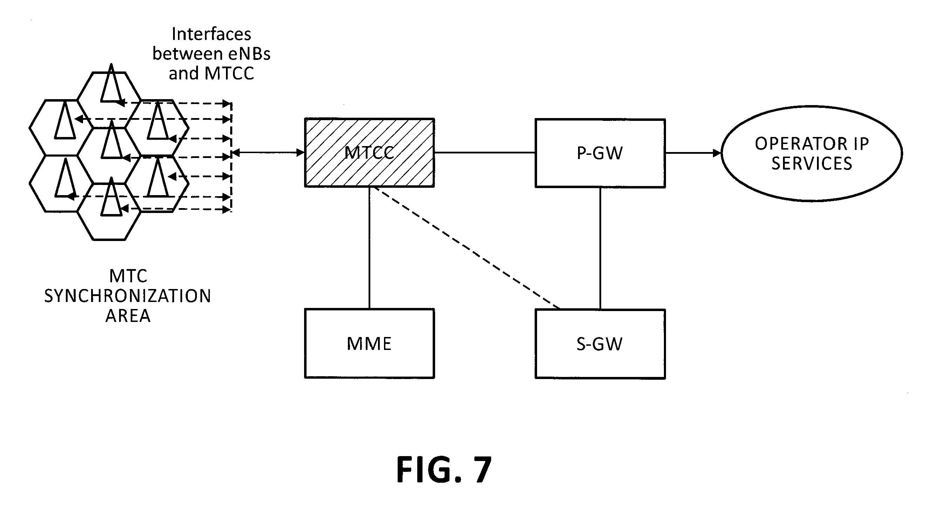

Fig. 7 illustrates the proposed architecture extension for introduction of the MTC Controller node (MTCC). A number of cells comprising an MTC Synchronization Area will be coordinated by a single MTCC node, which in turn will be preferably connected to the Packet Data Network Gateway (P-GW). Connection to the Serving Gateway (S-GW) can be optionally provided (in dashed lines) should the number of MTCC nodes were too high to be all connected directly to the P-GW. Generally, there will be as many MTCC nodes as MTC Synchronization Areas in the network.

The MTCC serves as an anchor point for user mobility within an MTC Synchronization Area. Depending on its size it may be necessary to connect the MTCC with the S-GW, but given the low mobility requirements of MTC devices it may be preferable to directly connect it to the P-GW for data offloading towards external networks. An additional connection to the Mobility Management Entity (MME) allows for granting access or not to a given MTC device depending on admission and congestion strategies. Although defined as a separate logical entity, actual implementations may co-locate the MTCC with other network nodes like S-GW or MME.

Actual interfaces between the MTCC and other LTE network elements may be based upon existing interfaces (such as X2 or S1) but not precluding any other possibility, provided that they support the required data and signaling traffic for the amount of MTC traffic in an MTC Synchronization Area. The MTCC node should have the following functions:
○ Register, de-register and control access for any MTC devices actually present in an MTC Synchronization Area. To this purpose, the base stations can send suitable layer-3 messages to the MTCC whenever a new MTC device tries to camp in a given cell, without intervention from the UE. Control procedures between the MTCC and the base stations, as well as between the MTCC and the MME, would thus be transparent to devices.
○ Receive from the P-GW or the S-GW any downlink MTC data aimed at any of the users registered within its MTC Synchronization Area, and broadcast the contents of the MTC MBSFN subframes to all the cells.
○ Combine the uplink signals received from all the cells within the MTC Synchronization Area to improve detection. Any combining strategy (at a physical or higher level) may be used according to implementation needs, such as Maximum Ratio Combining (MRC) or selection combining.
○ Control MTC scheduling information through dedicated MTC MBSFN subframes, which would indicate the uplink and downlink resources reserved for each MTC device. Similarly, control the pattern of MTC MBSFN subframes according to the MTC traffic load, and send the appropriate system information to be broadcast by the cells.

Mobility between cells will be managed in a standard way, but the MTCC would keep track of MTC devices in order to perform the necessary registrations and deregistrations whenever a device enters or leaves its MTC Synchronization Area. Given the very low mobility requirements foreseen for MTC devices, it is expected that the associated control overhead is very low.

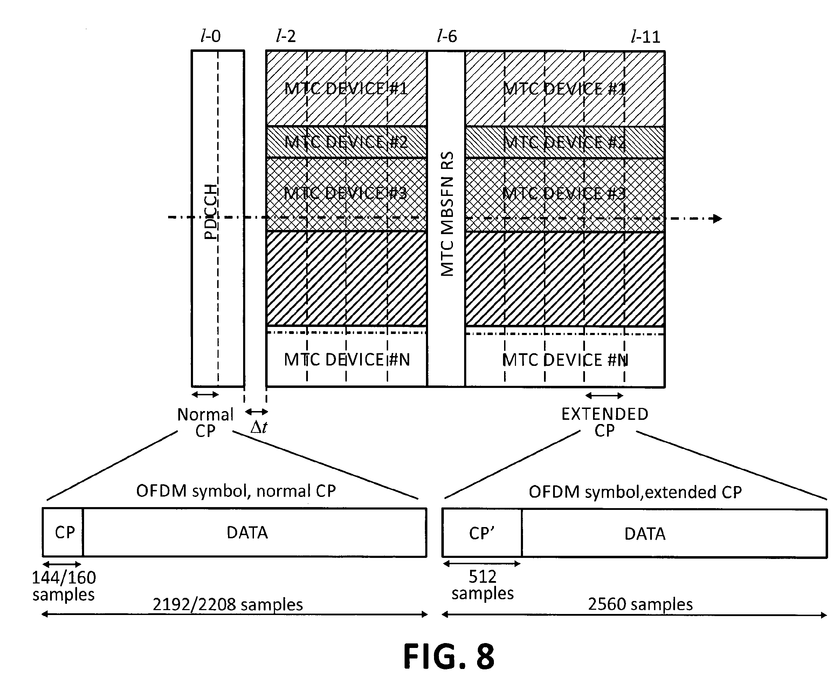

Figure 8 shows the proposed subframe structure for MTC MBSFN subframes. The extended cyclic prefix is used (∼17 microseconds, according to normal MBSFN operation) for absorbing physical transmissions from far cells. 12 OFDM symbols are available in each subframe, out of which the first one or two symbols must be reserved for legacy (non-MTC) control channels (PDCCH) and signals (namely cell reference signals). These first OFDM symbols must be devoted to PDCCH for handover measurements, employing the same cyclic prefix length as that used in non-MBSFN subframes, and also carrying legacy uplink resource grants. Therefore, when normal CP is used a gap Δt is created between the end of the control region and the start of the extended CP part. In 20 MHz system bandwidths the normal CP length is 144 or 160 samples (depending on the symbol number), while the extended CP length is 512 samples.

The remaining 10 OFDM symbols can be devoted to MTC-specific information, with a number of resource blocks (RBs) being allocated to each of the served MTC devices. Resource allocation information for each MTC device will be signaled by MTC MBSFN Scheduling subframes, as explained below.

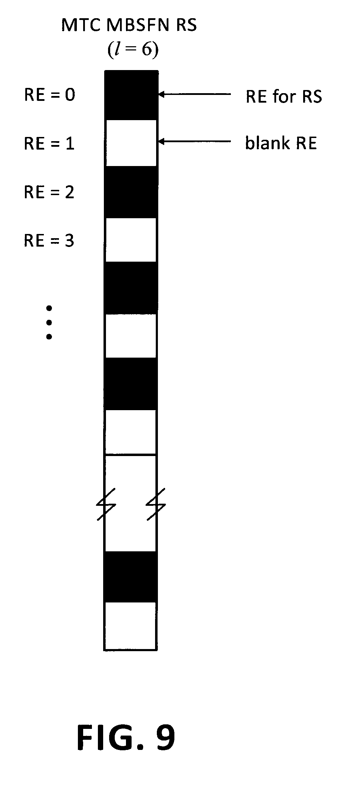

Given that MTC traffic will present very low mobility, and possibly small coherence bandwidth (caused by large delay spreads from distant cells), only one OFDM symbol per subframe can be dedicated to reference signals (RS) with a high frequency density. This special RS will be denoted as MTC MBSFN reference signal, or MTC MBSFN RS. Fig. 9 illustrates a possible MTC MBSFN RS structure, where one resource element (RE) every two is devoted to reference signals. Other possibilities can also be considered, provided that low mobility and small coherence bandwidths are supported as required by MTC traffic.

The proposed time multiplexing of MTC and non-MTC traffic allows for clean separation between the two traffic types without significant impact on the overall latency. It is also possible to address MTC requirements without impacting legacy LTE transmissions. Non-MTC devices not supporting MBMS are required to detect and discard MBSFN subframes, and will not be impacted by MTC traffic. Similarly, non-MTC devices willing to receive MBSFN subframes will not decode MTC MBSFN subframes, as higher-layer MBMS signaling will schedule MBMS channels at subframes other than those reserved for MTC. For this to happen, proper configuration of MBMS channels will be necessary in order to avoid collisions between MTC and MBMS traffic.

Some of the MTC MBSFN subframes shall be dedicated to carrying MTC scheduling information, including the actual subframes and RBs allocated to each MTC device in an MTC Synchronization Area, for both uplink and downlink. This information will be delivered by MTC MBSFN Scheduling subframes. A simple scheduling format may be devised that takes advantage of the reduced number of transmission modes to be used for MTC devices (not likely addressing any MIMO techniques or precoding schemes). This invention does not consider any specific scheduling format for this purpose.

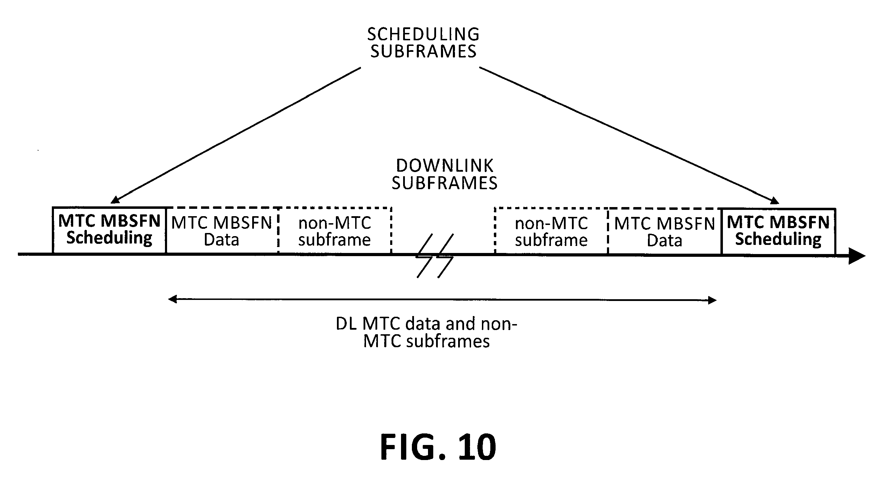

The occurrence of MTC MBSFN Scheduling subframes will also be broadcast through system information by all the cells comprising an MTC Synchronization Area. These subframes can have a higher or lower periodicity depending on the amount of MTC traffic to serve. All MTC devices should listen at MTC MBSFN Scheduling subframes in order to know the actual subframes and resource blocks scheduled for them. Appropriate DRX can be applied in between for battery saving (although legacy PDCCH should also be monitored with a certain periodicity for acquisition of system information). Devices in idle state can also monitor MTC MBSFN Scheduling subframes for paging information. Fig. 10 illustrates an example periodicity pattern expected for MTC MBSFN Scheduling subframes.

MTC devices will only transmit uplink information at the subframes indicated by the MTC scheduling information. However initial random access to the serving cell will be performed with the aid of the PRACH channel in the same way as legacy LTE devices.

The remaining MTC MBSFN subframes (denoted as MTC MBSFN Data subframes) can be devoted to MTC downlink user data. In these subframes data are simply allocated to each of the scheduled RBs for the set of active MTC devices registered in an MTC Synchronization Area.

Data scheduled for different MTC devices may have different MCS formats according to the changing radio conditions. Alternatively, a fixed MCS format may be employed in order to simplify channel state information feedback. Any possibilities in between can be considered for actual implementations, such as deriving long-term channel state through uplink measurements, without departure from the ideas proposed in this invention.

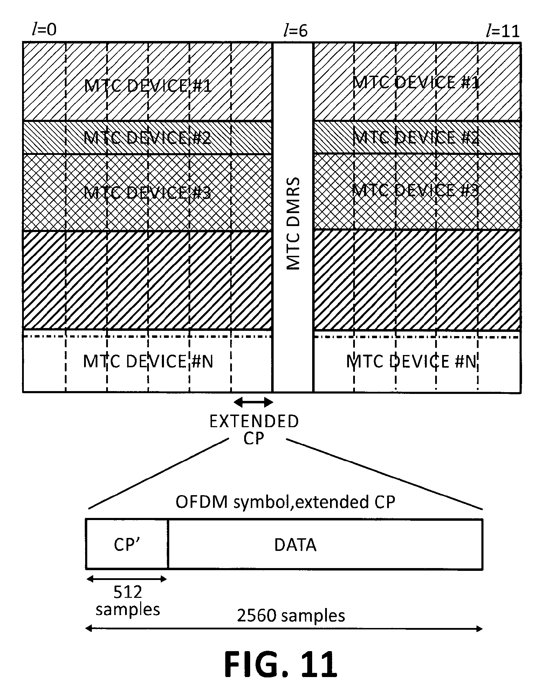

Fig. 11 illustrates a possible subframe structure for uplink MTC traffic. Traffic from non-MTC terminals will not be scheduled in these subframes, as the physical structure is changed so as to exploit the particular characteristics of MTC traffic.

Similar to downlink, an extended cyclic prefix is proposed to be used in MTC uplink subframes. This contrasts with legacy uplink operation where a constant cyclic prefix is employed in all uplink subframes. The rationale for the extended cyclic prefix is the ability to absorb timing advance differences which may arise from devices that are far away from each other within an MTC Synchronization Area. However the timing advance to be used by each MTC device will be controlled by its corresponding serving cell within the MTC Synchronization Area. All other cells will only contribute to the detection process.

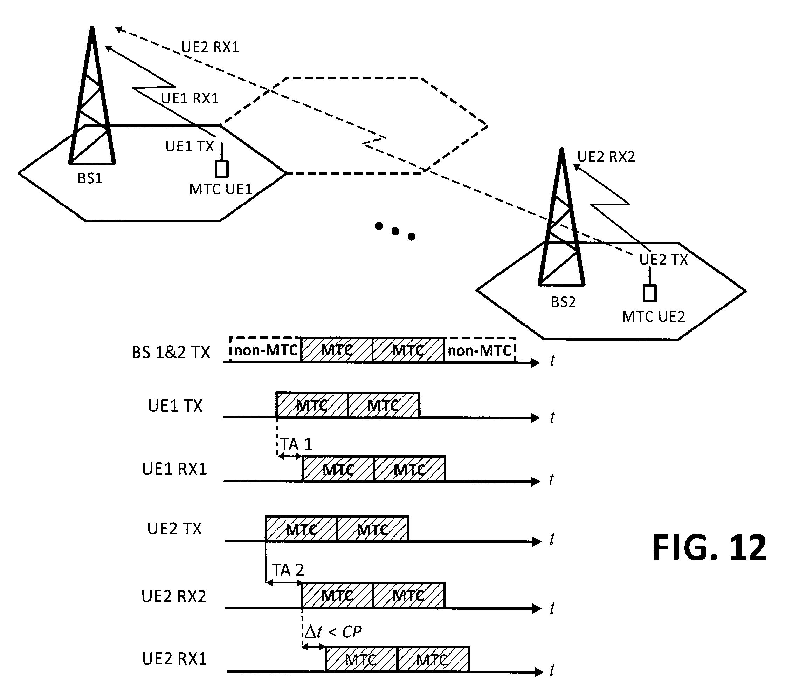

Fig. 12 illustrates the case where uplink transmissions from two distant MTC devices are received by a given cell within the MTC Synchronization Area. BS1 and BS2 synchronously transmit the same MTC contents at MTC MBSFN subframes. UE1 will transmit MTC subframes with a given timing advance TA1 controlled by BS1, and the same will happen with UE2, in order to compensate for the corresponding propagation delays. However BS1 will also detect the uplink signal from UE2 (denoted as UE2 RX1 in fig. 12), with a significant delay Δt caused by the excess propagation distance. This delay should be lower than the extended cyclic prefix duration in order to preserve uplink orthogonality.

The preferred extended cyclic prefix (∼17 microseconds) allows for propagation differences corresponding to 5 km, and therefore this would be the practical limit for the size of any MTC Synchronization Area. As the cells within the MTC Synchronization Area will be involved in uplink detection, large propagation delays between distant devices might destroy the orthogonality in uplink should the time difference between them were greater than the cyclic prefix duration.

The MTCC will avoid scheduling of uplink resources for non-MTC devices in MTC uplink subframes. Legacy devices need not be aware of the special subframe structure proposed for uplink MTC, provided that no legacy traffic will be present in those subframes. Semi-persistent scheduling configurations that could force non-MTC devices to transmit at MTC uplink subframes should also be avoided. Similarly, uplink HARQ retransmissions should never take place in MTC uplink subframes. One way of achieving this is acknowledging a previous transmission and delaying retransmission to a later subframe, by means of explicit PDCCH grant overriding the previous acknowledgement [11].

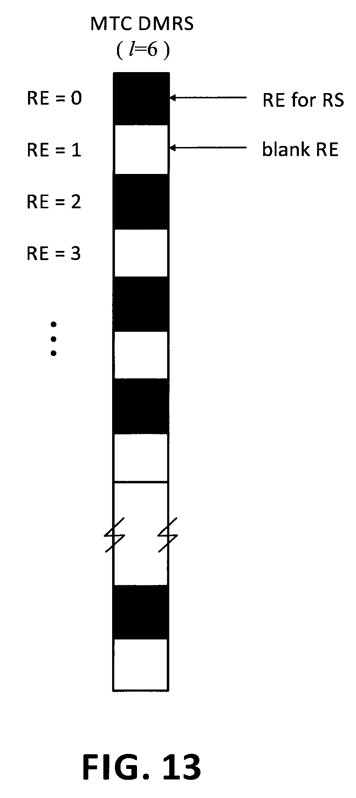

Only one central OFDM symbol is reserved for demodulation reference signals, as in the downlink case. These signals can be denoted as MTC Demodulation Reference Signals (MTC DMRS). Fig. 13 illustrates a possible MTC DMRS structure similar to that proposed for MTC MBSFN RS. Many other possibilities can also be considered provided that low mobility and small coherence bandwidths are supported.

It may be possible to allocate fractions of an RB for data, especially when poor coverage conditions demand an increased power spectral density in uplink.

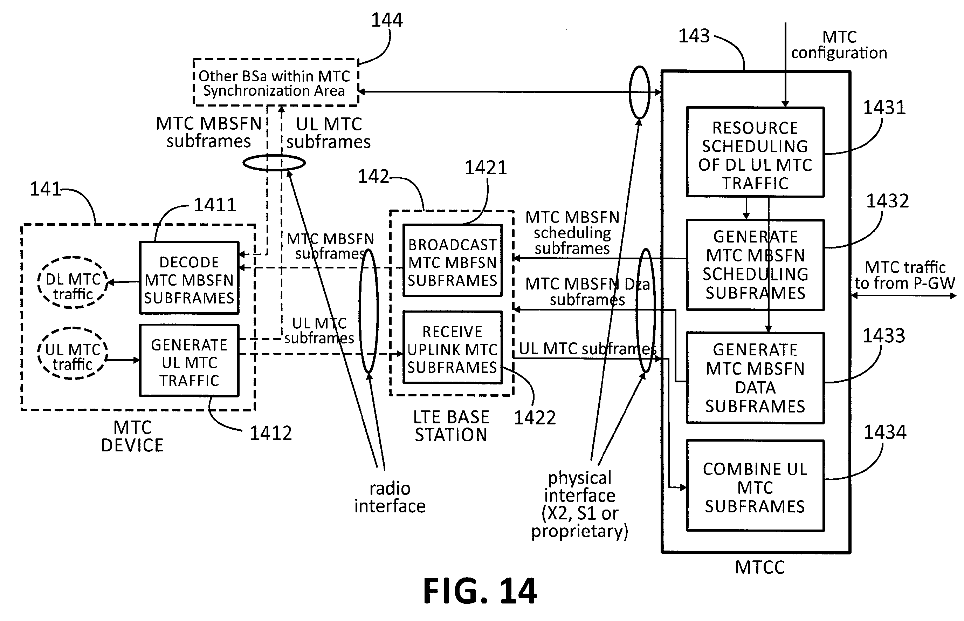

Fig. 14 illustrates a particular exemplary embodiment of the proposed invention. Prior art elements are depicted in dashed lines (as the MTC device and the base station), while new nodes and blocks are in solid lines. An MTC device 141 wants to exchange MTC data with an LTE serving base station 142 belonging to an MTC Synchronization Area, and is in turn connected to an MTCC node 143. The MTC device 141 and the base station 142 are connected through the radio interface, whereas the base stations and the MTCC 143 are connected through any physical interface (based on X2, S1, or any other suitable interface).

The MTC device 141 generates uplink MTC traffic 1412 which is received by the serving base station 142 through block 1422, as well as by the other cells contained in the same MTC Synchronization Area 144. UL MTC subframes from all the cells are in turn sent to the MTCC node 143, which combines the UL data for improved detection 1434. MTC traffic is then forwarded towards the P-GW by passing through the necessary LTE core network elements and interfaces.

Based on a given MTC configuration, the MTCC 143 performs the scheduling of resources for uplink and downlink MTC traffic 1431. With this information, block 1432 generates MTC MBSFN Scheduling subframes, and block 1433 generates MTC MBSFN Data subframes. Both types of MTC MBSFN subframes are then sent to all the base stations comprising the MTC Synchronization Area through the physical interface. Block 1421 in the base station broadcasts MTC MBSFN subframes, and the MTC device 141 receives DL MTC traffic through proper decoding of MTC MBSFN subframes 1411. This block 1411 receives MTC MBSFN subframes from the serving base station 142 as well as from all other base stations contained in the MTC Synchronization Area, and combines them appropriately. The resulting downlink MTC traffic is then forwarded to the application.

The proposed embodiment can be implemented as a collection of software elements, hardware elements, firmware elements, or a suitable combination of them.

As said, the proposed invention introduces the idea of synchronizing all traffic to/from MTC devices for coordinated transmission and reception in a given cluster of cells, denoted as MTC Synchronization Area, under control of a new node denoted as MTC Controller (MTCC). This cluster allows for uplink combining of MTC signals for improved detection, as well as simultaneous broadcast of MTC downlink signals. For this purpose, a special subframe structure is proposed which is time-multiplexed with legacy LTE subframes, exploiting MBSFN subframes in the downlink case and a new subframe structure in the uplink. This enables interoperability with legacy LTE devices, which would discard downlink MTC subframes and would not be scheduled in the new uplink subframes reserved for MTC traffic.

MBSFN subframes preferably enjoy an extended cyclic prefix structure by which downlink signals from distant base stations can be combined without suffering from inter-symbol interference. This characteristic is exploited for MTC traffic. Instead of relying on the PDCCH, scheduling information is concentrated on specific downlink subframes. This structure allows scheduling a large number of MTC devices within the MTC Synchronization Area, while the high latency expected for MTC traffic would not be impacted significantly. Moreover, a specific reference signal structure is introduced that exploits the very low mobility conditions of MTC devices, thus alleviating the RS density in the time domain. Other cell-specific procedures like random access or cell selection would remain unchanged for compatibility with non-MTC devices.

Uplink MTC data will also rely upon scheduling of resources by the MTCC node. Uplink MTC subframes will benefit from a different subframe structure with extended cyclic prefix for absorbing any Timing Advance differences, as well as new reference signals more suited to MTC conditions. Non-MTC uplink traffic will not collide with uplink MTC traffic whenever the MTCC assigns different subframes for each traffic type. The MTCC will be in charge of coordinating MTC and non-MTC resources, informing the base stations appropriately, as well as combining uplink MTC signals for improved coverage.

The changes proposed in this invention enable the support of large numbers of MTC devices, with orthogonal resource assignments within an MTC Synchronization Area, thereby improving uplink and downlink coverage. The proposed subframe structure enables enhanced support of low bit rate, low mobility, and high latency MTC traffic without significantly impacting legacy LTE operation. The pattern of MTC subframes can easily be adjusted by changing the system information in order to adapt to the traffic conditions.

The scope of the invention is given by the appended claims and all variations and equivalents which fall within the range of the claims are intended to be embraced therein.

## Claims

1. A method for the support of Machine-Type Communications (MTC) in a LTE wireless network, wherein at least one MTC user device (MTC_UE) is connected to a base station through a radio interface, **characterized in that** in order to extend coverage and enable the support of a plurality of other MTC user devices the method comprises:
- determining at least one set of cells, named as MTC Synchronization Area, in said LTE wireless network, whereby MTC traffic transmissions from said set of cells are simultaneously broadcast by said cells towards said MTC user device (MTC_UE);
- determining at least one controller node (MTCC) connected to said at least one determined set of cells;
- scheduling, said controller node (MTCC), downlink MTC data to said MTC user device (MTC_UE) on a subset of Multicast/Broadcast Single Frequency Network (MBSFN) downlink subframes reserved for MTC downlink traffic within said set of cells;
- scheduling, said controller node (MTCC), uplink MTC data to said MTC user device (MTC_UE) in some uplink subframes reserved for MTC traffic within said set of cells, said subframes containing, merely, data scheduled for MTC user devices;
- detecting uplink MTC data sent from said MTC user device (MTC_UE) simultaneously by all the cells comprising said set of cells; and
- sending, said controller node (MTCC), to said set of cells for improved downlink coverage, downlink MTC subframes, named as MTC MBSFN subframes, and combining said detected uplink MTC data for improved uplink coverage.

2. A method according to claim 1, comprising determining as many controller nodes (MTCC) as many of said set of cells are determined in said LTE wireless network.

3. A method according to any of previous claims, wherein said uplink and said downlink subframes reserved for MTC traffic comprise an extended cyclic prefix length structure.

4. A method according to claim 3, wherein a subset of said downlink MBSFN subframes reserved for MTC traffic includes MTC scheduling information to said MTC user device (MTC_UE) within said set of cells.

5. A method according to claim 4, wherein a subset of said downlink MBSFN subframes reserved for MTC traffic includes MTC data towards said MTC user device (MTC_UE) within said set of cells, said subset being different from said subset of subframes including MTC scheduling information.

6. A method according to claim 4, wherein said MTC scheduling information comprises informing of the actual subframes in use and of the resource blocks (RBs) allocated to said MTC user device (MTC_UE) in said set of cells.

7. A method according to claims 1 or 2, wherein said set of cells are connected to said controller node (MTCC) through at least a S1 or an X2 interface.

8. A method according to claims 1 or 2, wherein said controller node (MTCC) is connected to at least a Packet Data Network Gateway (P-GW) node or a Serving Gateway (S-GW) node of said LTE wireless network.

9. A method according to claims 1 or 2, wherein information about the subset of MBSFN downlink subframes reserved for MTC traffic is broadcast within said set of cells through system information by a control channel.

10. A method according to claim 5, wherein said MTC user device (MTC_UE) turns off reception during subframes not scheduled for MTC downlink traffic within said set of cells, irrespective of the Discontinuous Reception configurations of the cell.

11. A communication system for the support of Machine-Type Communications (MTC) in a LTE wireless network, comprising at least one base station, and at least one MTC user device (MTC_UE) connected to said base station, **characterized in that** the system comprises:
- at least one set of cells, named as MTC Synchronization Area, configured to simultaneously:
broadcast MTC traffic transmissions thereof towards said MTC user device (MTC_UE), and to
detect uplink MTC data sent from said MTC user device (MTC_UE);
- at least one controller node (MTCC) connected to said at least one set of cells, said controller node (MTCC) including:
- means for scheduling downlink MTC data to said MTC user device (MTC_UE) on a subset of Multicast/Broadcast Single Frequency Network (MBSFN) downlink subframes reserved for MTC downlink traffic within said set of cells;
- means for scheduling uplink MTC data to said MTC user device (MTC_UE) in some uplink subframes reserved for MTC traffic within said set of cells, said subframes containing, merely, data scheduled for MTC user devices;
- means for sending to said set of cells downlink MTC subframes, named as MTC MBSFN subframes, and
- means for combining the simultaneously detected uplink MTC from said set of cells.

12. A controller node comprising:
- at least one processor; and
- at least one memory including computer program code, wherein said at least one memory and the computer program code are configured to, with said at least one processor, cause the controller node to at least coordinate transmission and reception of at least one synchronized set of cells, that simultaneously broadcast MTC traffic transmissions thereof towards at least one MTC user device (MTC_UE) and detect uplink MTC data sent from said MTC user device (MTC_UE), by:
- scheduling downlink MTC data to said MTC user device (MTC_UE) on a subset of Multicast/Broadcast Single Frequency Network (MBSFN) downlink subframes reserved for MTC downlink traffic within said set of cells;
- scheduling uplink MTC data to said MTC user device (MTC_UE) in some uplink subframes reserved for MTC traffic within said set of cells, said subframes containing, merely, data scheduled for MTC user devices;
- sending to said set of cells downlink MTC subframes, named as MTC MBSFN subframes, and
- combining the simultaneously detected uplink MTC data from said set of cells.

13. A controller node according to claim 12, comprising means for connecting with said at least one synchronized set of cells through at least a S1 or an X2 interface.

14. A controller node according to previous claims 12 or 13, comprising means for connecting with at least a Packet Data Network Gateway (P-GW) node or a Serving Gateway (S-GW) node of a LTE wireless network.
